(19)

Europäisches
Patentamt
European
Patent Office
Office européen
des brevets

(11) **EP 4 280 117 A1**

(12) **EUROPEAN PATENT APPLICATION**

(43) Date of publication:
**22.11.2023  Bulletin 2023/47**

(21) Application number: **23169673.3**

(22) Date of filing: **25.04.2023**

(51) International Patent Classification (IPC):
***G06N 3/092*** *(2023.01)* ***G06N 3/006*** *(2023.01)*
***G06N 7/01*** *(2023.01)*

(52) Cooperative Patent Classification (CPC):
**G06N 3/092; G06N 3/006;** G06N 7/01

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.05.2022  EP 22173872**

(71) Applicant: **Aptiv Technologies Limited
St. Michael (BB)**

(72) Inventors:
  • **PANKIEWICZ, Nikodem
    30-653 Krakow (PL)**
  • **KOWALCZYK, Pawel
    32-050 Skawina (PL)**
  • **ORLOWSKI, Mateusz
    30-817 Krakow (PL)**
  • **TURLEJ, Wojciech
    30-349 Krakow (PL)**

(74) Representative: **Manitz Finsterwald
Patent- und Rechtsanwaltspartnerschaft mbB
Martin-Greif-Strasse 1
80336 München (DE)**

(54) **METHODS AND DEVICES FOR ANALYZING A REINFORCEMENT LEARNING AGENT BASED ON AN ARTIFICIAL NEURAL NETWORK**

(57)    A computer implemented method for analyzing a reinforcement learning agent based on an artificial neural network comprises: acquiring data of a plurality of runs of the artificial neural network; processing the acquired data using an attribution method to obtain attributation data; and analyzing the artificial neural network based on the attribution data.

EP 4 280 117 A1

**Description**

FIELD

The present disclosure relates to methods and devices for analyzing a reinforcement learning agent based on an artificial neural network.

BACKGROUND

Machine learning is widely applied in everyday devices and computer applications. Beyond making the popular applications more attractive with artificial intelligence (AI), AI may be used to solve real-world complex problems. One such challenge is to plan the motion of the automated vehicle (AV) on the highway in safe and effective manner. A promising approach to this problem is the application of Deep Reinforcement Learning (RL) methods which use Artificial Neural Networks (ANN) to train the decision-making agents. However, the use of ANN-based methods introduces the black box factor, which makes agents' decisions unpredictable and therefore increases operational risk. Such a factor is ineligible in the application for which safety must be verified and proved. Therefore, the utilization of ANN based methods to plan the vehicle motion on the road, without understanding the ANN decisions, may be risky for the system's end-user.

Regarding RL in AV, over the past few years, there has been an increasing interest in the use of RL in the motion planning of automated vehicles. Examples of applications of RL may be found for typical driving scenarios such as lane-keeping, lane changing, ramp merging, overtaking, and more.

Regarding explainable RL, since the application of machine learning becomes more popular, the demand for its interpretability has increased. Initially, a field of Interpretable Machine Learning (IML) has been developed, partially focused on the interpretation of the Neural Networks activation. The interpretation relies on calculating how the output of the ANN was impacted by each element of the given part of the network.

However, the explainability of RL (XRL) goes beyond understanding single neural activation. That is because of temporal dependency between consecutive states and the agent's actions which induce the next visited states. A sequence of transitions may be used to interpret the agent's action concerning the long-term goal. Additionally, it is also important that the objective of agent training is maximizing the sum of collected rewards, rather than mapping the inputs to the ground truth label as in the case of Supervised Learning. These additional features allow explaining the behavior of RL agent in an introspective, causal, and contrasting way.

The recent advances in XRL may be categorized into two major groups: transparent algorithms and post-hoc explainability. The group of transparent algorithms includes those whose models are built to support their interpretability. Another approach is simultaneous learning which learns both policy and explanation at the same time. The last type of transparent learning is representation learning which involves learning latent features to facilitate the extraction of meaningful information by the agent models.

However, DRL algorithms are not natively transparent; therefore post-hoc explainability is more common. It relies on an analysis of states and neural activations of transitions executed with an already trained agent.

One post-hoc method is saliency maps which may be applied to Convolutional Neural Networks (CNN) with images as an input. This method generates a heatmap that highlights the most relevant information for CNN on the image. However, understanding individual decisions is not enough to interpret the general behavior of an agent.

Thus, there is a need for methods and devices for understanding what the ANN's decisions are based on.

SUMMARY

In one aspect, the present disclosure is directed at a computer implemented method for analyzing a reinforcement Learning agent based on an artificial neural network, the method comprising the following steps which may be performed (in other words: carried out) by computer hardware components: acquiring data of a plurality of runs of the artificial neural network; processing the acquired data using an attribution method to obtain attribution data; and analyzing the artificial neural network based on the attribution data.

Attribution may be the value of element's contribution to the artificial neural network output. An element may be input to the artificial neural network, layer of the artificial neural network, or a single neuron of the artificial neural network. Contribution may be positive or negative. The element may contribute to return a given output as well as contribute to not return a given output.

According to various embodiments, the data is acquired during at least one real-life run and/ or during at least one simulated run.

According to various embodiments, the attribution method is based on determining a gradient with respect to input data along a path from a baseline to the input data.

A baseline may be an arbitrarily composed input to the artificial neural network which may be neutral for the model. Neutral may mean that the artificial neural network should return default values when provided with a neutral input (for example in a classification problem, the artificial neural network should return equal prediction for all classes when provided with a neutral input).

According to various embodiments, the baseline represents a general reference to all possible inputs.

According to various embodiments, the attribution method comprises at least one of Integrated Gradients, DeepLIFT, Gradient SHAP, or Guided Backpropagation and Deconvolution.

According to various embodiments, the computer implemented method further comprises dividing the attribution data into a plurality of groups, wherein the artificial neural network is analyzed based on the plurality of groups.

According to various embodiments, the computer implemented method further comprises determining a correlation between parameters, attribution related to the parameters, and an output of the artificial neural network.

The parameters may be the input vector which is consumed by the artificial neural network. For example, the parameters may describe ego vehicle features, detected objects and/or road geometry. Therefore, the calculated correlation may examine the relationship between parameter values and attribution values with respect to output of the artificial neural network.

According to various embodiments, the correlation comprises a Pearson correlation and/or a Spearman's rank correlation coefficient.

According to various embodiments, the computer implemented method is applied to a motion planning module.

As is described herein, the Maneuver agent may use discrete action space (classification problem) and the ACC agent may use continuous action space (regression).

According to various embodiments, analyzing the artificial neural network comprises detecting errors in the artificial neural network or in input data to the artificial neural network.

According to various embodiments, the computer implemented method provides a local and post-hoc method for explaining the artificial neural network.

In another aspect, the present disclosure is directed at a computer system, said computer system comprising a plurality of computer hardware components configured to carry out several or all steps of the computer implemented method described herein.

The computer system may comprise a plurality of computer hardware components (for example a processor, for example processing unit or processing network, at least one memory, for example memory unit or memory network, and at least one non-transitory data storage). It will be understood that further computer hardware components may be provided and used for carrying out steps of the computer implemented method in the computer system. The non-transitory data storage and/or the memory unit may comprise a computer program for instructing the computer to perform several or all steps or aspects of the computer implemented method described herein, for example using the processing unit and the at least one memory unit.

In another aspect, the present disclosure is directed at a non-transitory computer readable medium comprising instructions which, when executed by a processor, cause (or make) the processor to carry out several or all steps or aspects of the computer implemented method described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable medium may be configured as a data storage that is accessible via a data connection, such as an internet connection. The computer readable medium may, for example, be an online data repository or a cloud storage.

The present disclosure is also directed at a computer program for instructing a computer to perform several or all steps or aspects of the computer implemented method described herein.

DRAWINGS

Exemplary embodiments and functions of the present disclosure are described herein in conjunction with the following drawings, showing schematically:

Fig. 1    a graph which shows the accumulated average sum of rewards;

Fig. 2    an illustration of distributions of attribution values for one of ego parameters for all maneuver types;

Fig. 3    a scatterplot which shows comparison between attribution values;

Fig. 4    a flow diagram illustrating a method for analyzing a reinforcement learning agent based on an artificial neural network according to various embodiments; and

Fig. 5    a computer system with a plurality of computer hardware components configured to carry out steps of a computer implemented method for analyzing a reinforcement learning agent based on an artificial neural network to various embodiments.

## DETAILED DESCRIPTION

Machine learning is widely applied in everyday devices and computer applications. Beyond making the popular applications more attractive with artificial intelligence (AI), AI may be used to solve real-world complex problems. One such challenge is to plan the motion of the automated vehicle on the highway in safe and effective manner. A promising approach to this problem is the application of Deep Reinforcement Learning (RL) methods which use Artificial Neural Networks (ANN) to train the decision-making agents. However, the use of ANN-based methods introduces the black box factor, which makes agents' decisions unpredictable and therefore increases operational risk. Such a factor is ineligible in the application for which safety must be verified and proved. Therefore, the utilization of ANN based methods to plan the vehicle motion on the road, without understanding the ANN decisions, may be risky for the system's end-user.

According to various embodiments, an evaluation method of RL agent based on Interpretable Machine Learning (IML) techniques combined with statistical analysis may be provided. The black-box model may be deciphered by analyzing the neural activations in the distribution of possible inputs with respect to agent decisions. The methods according to various embodiments may investigate whether the agent's decisions are consistent with the assumptions and whether the ANN decision process matches the human intuition. Additionally, debugging the model itself and detecting data or model corruption may be provided. The methods may inspect RL-driven applications whose decisions are critical for safety and confirmation of proper functioning is required.

While machine learning models are powering more and more everyday devices, there is a growing need for explaining them. This especially applies to the use of Deep Reinforcement Learning in solutions that require security, such as vehicle motion planning. According to various embodiments, methods and devices are provided for understanding what the RL agent's decision is based on. These methods and devices rely on conducting statistical analysis on a massive set of state-decisions samples. The methods and devices may indicate which input features have an impact on the agent's decision and the relationships between decisions, the significance of the input features, and their values. The methods and devices may allow determining whether the process of making a decision by the agent is coherent with human intuition and what contradicts it. The methods and device may be applied to the RL motion planning agent which is supposed to drive a vehicle safely and efficiently on a highway. It has been found that making such analysis allows for a better understanding agent's decisions, inspecting its behavior, debugging the ANN model, and verifying the correctness of input values, which increases its credibility.

Devices and methods may be provided for attribution analysis of Reinforcement Learning based highway driver.

According to various embodiments, a method of evaluation of two DRL (deep reinforcement learning) agents which are designated to plan the behavior to achieve safe and effective highway driving experience are provided. The first agent (Maneuver Agent) selects the appropriate discrete maneuvers (Follow Lane, Prepare For Lane Change (Left/Right), Lane Change (Left/Right), Abort) and the second one (ACC agent) controls the continuous value of acceleration. On the basis of trained these two agents, an evaluation method may be provided based on Integrated Gradient and further statistical analysis. The analysis consists of ANOVA, t-test, and examination of linear and monotonic correlation.

According to various embodiments, a method of interpreting RL agent decisions, adequate for discrete and continuous action space, may be provided. For this purpose, two separate agents may be trained.

The first one (Maneuver Agent) is responsible for planning appropriate maneuvers to be executed. The agent's action space may be discrete and contains six items: Follow Lane, Prepare For Lane Change (Right, Left), Lane Change (Right, Left), and Abort Maneuver. The objective of the agent may be to navigate in the most efficient way while preserving the gentleness desired on the roads. Expected behaviors are for example changing to the faster lane if the ego's velocity is lower than the speed limit, or returning to the right lane when it is possible and worthwhile.

The second agent (ACC Agent) may be responsible for planning the continuous value of acceleration when Follow Lane maneuver is selected by the higher-level agent. Reward function may incentivize the agent to drive as fast as possible in terms of the speed limit, keep a safe distance to the vehicle ahead, increase comfort by minimizing jerks and avoid collisions.

The training may use a simulation of a highway environment in which parameters such as the number of lanes, traffic flow intensity, characteristics of other drivers' behavior, and vehicle model dynamics are randomized providing diverse traffic scenarios.

The agents may take the form of Feed Forward Neural Network that are trained with Proximal Policy Optimization (PPO) algorithm. As an input, they consume information about the ego's vehicle, percepted vehicles around (position, speed, acceleration, dimensions), and information about the road geometry. Additionally, the Maneuver agent may consumes a list of maneuvers that are available from the safety perspective according to various rules. As an output, the Maneuver Agent may return categorical distribution parameters which are the probabilities of selecting maneuvers. The ACC Agent may output the parameters of Normal distribution (mean, and log standard deviation). From that values, the actual agent's action may be sampled with respect to corresponding distributions.

Integrated Gradients ("IG"; Mukund Sundararajan, Ankur Taly, and Qiqi Yan: "Axiomatic attribution for deep networks", 34th International Conference on Machine Learning, ICML 2017, 7:5109-5118, 3 2017) is an example of a Primary Attribution method which aims at explaining the relationship between a models' output with respect to the input features by calculating the importance of each feature for the model's prediction. For calculation, IG needs baseline input x' which is composed arbitrarily and should be neutral for the model. For example, if the model consumes images, the typical baseline is an image which contains all black or white pixels. IG, firstly, in small steps $\alpha$ generates a set of inputs by linear interpolation between the baseline and the processed input x. Then it computes gradients between interpolated inputs and model outputs (eq. 1) to approximate the integral with the Riemann Trapezoid rule.

$$IntegratedGradients_i(x) ::= (x_i - x_i') \times \int_{\alpha=0}^{1} \frac{\delta F(x' + \alpha \times (x - x'))}{\delta x_i} d\alpha \qquad (1)$$

where i denotes a feature; x denotes input; x' denotes a baseline; and $\alpha$ denotes an interpolation constant.

In the following, collecting neural activations according to various embodiments will be described.

The Maneuver and ACC Agents may be trained, for example with PPO algorithm. The training may last until the mean of episodes sum of rewards has reached the target value. Afterwards, the best model checkpoints may be selected and an evaluation of agents may be run on test scenarios generating 5h driving experience for Maneuver Agent and 3.5h for ACC agent. The samples consist of state inputs and agent decisions (action value for ACC agent and probabilities of selecting particular action in case of Maneuver Agent). In an example, in the case of Maneuver Agent, the input vector may consists of 372 float values and 162 accordingly for ACC Agent. Based on that data, the attribution of each input value may be calculated using the Integrated Gradients method. As a baseline input, a feature vector may be selected that represents 3 lanes highway with no other vehicles besides the ego in its default state (max legal velocity, 0 acceleration). For calculation, the Captum library (BSD licensed) may be used, which provides an implementation of a number of IML methods for PyTorch models. The results of attributations calculation with associated input features and ANN's decisions may further be inspected with statistical analysis.

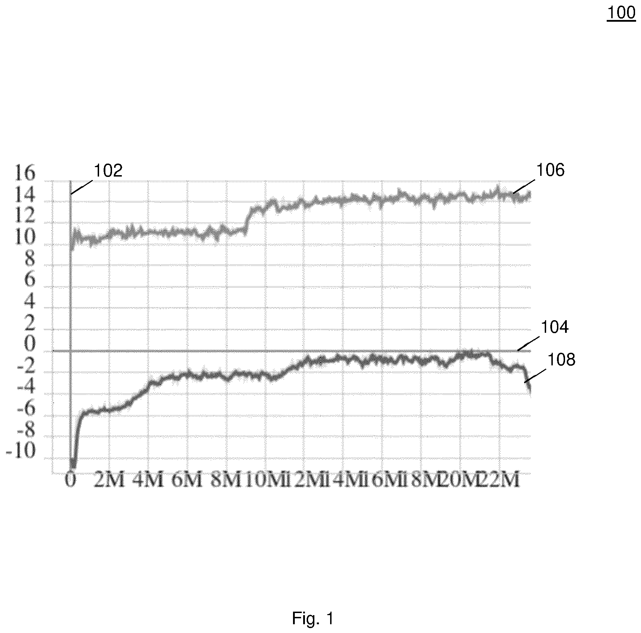

Fig. 1 shows a graph 100 which shows the accumulated average sum (as indicated by vertical axis 102) of rewards for the Maneuver Agent (top lines 106 over horizontal axis 104) and the ACC Agent (bottom lines 108) during the episodes between optimization steps of the training. The training may typically achieve its best performance and then starts collapsing; thus, to get the best agent, the checkpoint with the highest mean sum of rewards was chosen. The difference between the reward levels may be due to the different definitions of the reward function.

According to various embodiments, statistical analysis may include two parts. For the calculations, the Minitab software may be used. The first part may focus on the examination of the level of significance of the attribution values and analysis of their distribution. The second part may study the relationships between attribution values, values of input features, and probabilities of selecting maneuvers in the case of Maneuver planning Agent.

According to various embodiments, the first step of statistical analysis of attribution may be to identify parameters with statistically significant parameters of attribution distribution regarding the selected item from action space for Maneuver Agent and overall distribution for ACC Agent. The next step may be to perform an analysis of variance for the set of parameters determined in the first step. To do so, attribution data may be divided according to the type of maneuver into six groups. Attribution that regards objects and roads may be summed up according to each one of the characteristic parameters for those aspects. Then, t-test may be performed for every parameter with Null hypothesis $H_0: \mu = 0.03$ and alternative hypothesis $H_1 : \mu > 0.03$. The significance level of all tests may be assumed as $\alpha = 0.05$. Based on those results, it may be decided which distributions of parameters have a significantly higher mean value than 0.03 distinguishing between different maneuvers. Finally, Welch's ANOVA (H. Liu. "Comparing Welch's ANOVA, a Kruskal-Wallis Test, and Traditional ANOVA in Case of Heterogeneity of Variance". Virginia Commonwealth University, 2015) may be performed for results that are significantly based on the t-test which gives us information about which parameters were significantly more important than others regarding available maneuver. Samples may be divided into groups with additional post-hoc test. To visualize distinguished results, the standard deviation for those samples and 95%-confidence intervals may be calculated for their means which gives 95% assurance that the expected value is within those intervals regarding the dispersion of data.

The second part of the analysis may rely on the examination of the linear and monotonic relationship (correlation) between feature attribution and the probability of selecting a given maneuver. For example, a Pearson correlation may be applied to study linear correlation and Spearman's rank correlation coefficient Rho may be applied to examine a monotonic correlation. Correlations may be calculated for attribution of all input features concerning the probability of selecting a particular maneuver.

An analysis based on a Pearson correlation may begin with the calculation of the p-value and identification of whether the correlation is significant at 0.05 $\alpha$-level. The p-value may indicate whether the correlation coefficient is significantly different from 0. If the coefficient effectively equals 0 it indicates that there is no linear relationship in the population of compared samples. Afterward, the Pearson correlation coefficient itself may be interpreted to determine the strength and direction of the correlation. The correlation coefficient value ranges from -1 to +1. The larger the absolute value of the coefficient, the stronger the linear relationship between the samples. The convention may be taken that the absolute value of a correlation coefficient lower than 0.4 is a weak correlation, the absolute value of a correlation coefficient between 0.4 and 0.8 is a moderate linear correlation, and if the absolute value of the Pearson coefficient is higher than 0.8 the strength of the correlation is large. The sign of the coefficient may indicate the direction of the dependency. If the coefficient is positive, variables increase or decrease together and the line that represents the correlation slopes upward. A negative coefficient means that one variable tends to increase while the other decreases and the correlation line slopes downward.

The fact that an insignificant or low Pearson correlation coefficient does not mean that no relationship exists between the variables because the variables may have a nonlinear relationship. Spearman's rank correlation coefficient Rho may be utilized to examine the monotonic relationship between samples. In a monotonic relationship, the variables tend to move in the same relative direction, but not necessarily at a constant rate. To calculate Spearman correlation, the raw data may have to be ranked and then its correlation may be calculated. The test may also include a the significance test; Spearman Rho correlation coefficient describes the direction and strength of the monotonic relationship. The value may be interpreted analogously as the Pearson values. To visualize results and look for other types of relationships, scatterplots for different pairs of samples may be provided.

The results of statistical analysis may be inspected as described in the following. Firstly, the boxplots which visualize the distribution of attribution for a particular maneuver for each input signal may be examined. From the plots, one may easily see how a given feature contributes to choosing a given maneuver.

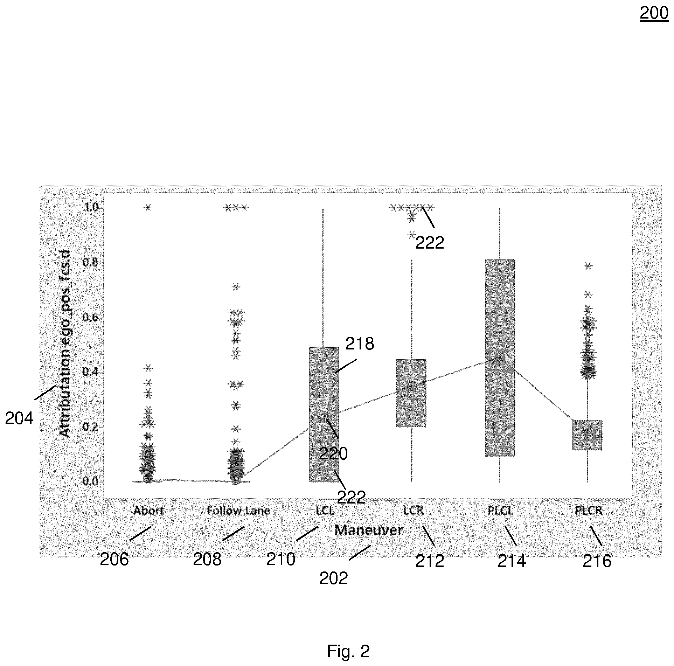

Fig. 2 shows an illustration 200 of distributions of attribution values (over vertical axis 204) for one of ego parameters (distance from the center of lane) for all maneuver types (wherein the maneuvers are illustrated over horizontal axis 202, and include abort 206, follow lane 208, lane change to left 210, lane change to right 212, prepare for lane change to left 214, and prepare for lane change to right 216).

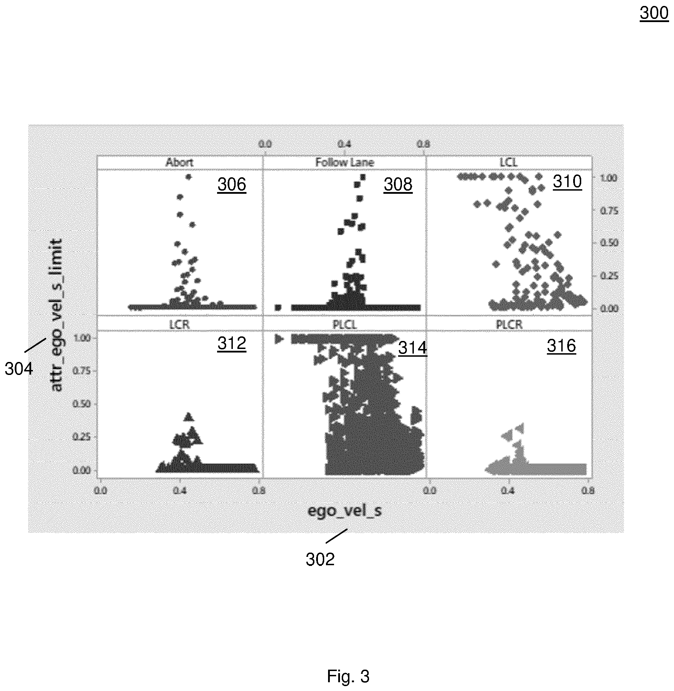

For example, in Fig. 2, it can be seen that the main body of distributions (illustrated as boxes, for example as box 218 for LCL 210), mean (illustrated as dots, for example illustrated as dot 220 for LCL 210), and median (illustrated as horizontal line in the box, for example illustrated as horizontal line 222 for LCL 210) of attribution values lies much higher for maneuvers connected to lane change. For Follow Lane and Abort maneuvers attribution higher than 0 is considered an outlier (illustrated as stars, for example stars 222 for LCR 212). This behavior may be in line with the driver's intuition and proves to us that the neural network works as intended, at least in this individual field. Next, the correlation between attribution and values of input features may be examined. This may be checked in two directions. Firstly, one may look at the strong correlations and compare them with human intuition. For example, it may be noticed that the agent, while considering selecting Follow Lane maneuver, pays less attention to the value of longitudinal velocity (vel_s) while the velocity grows. Although, it is more attentive to the parameter which informs about fulfilling velocity limit (vel_s_limit). This attitude may be shown by Spearman Rho correlation, however, the Pearson does not reveal it. Additionally, one may confirm that by inspecting the scatterplots of vel_s and vel_s_limit attributations presented in Fig. 3. It is believed that such behavior is similar to human drivers, because they, while speeding up, stop thinking about absolute speed and start concerning if they drive with legal velocity, comparing their velocity with the speed limit.

Fig. 3 shows a scatterplot 300 which shows comparison between vel_s (on horizontal axis) and attribution values of vel_s_limit (on vertical axis 304) for all maneuvers (i.e. for abort 306, follow lane 308, lane change to left 310, lane change to right 312, prepare for lane change to left 314, and prepare for lane change to right 316.

Secondly, one may deliberate where the strong correlation should occur to match human intelligence. For example, it may be assumed that the driver should compare the longitudinal distance to the target vehicle to its own velocity. Therefore, the correlation between attribution of objects' position with respect to the longitudinal velocity should be strong. The analysis indicates only weak strength of correlation thus contrary to assumptions.

Additionally, results inspection may allow to detect two types of errors in our model. During looking at the scatterplots, which demonstrate the value of attribution with respect to the input feature values, one may easily detected that one's feature (lateral position) is normalized to the range (-2,0) instead of (-1,1). This may allow for fixing the implementation of the agent's observations.

The second finding regards the ANN architecture. The lack of attribution for every sample in one region of input features may raise awareness of the problem of vanishing gradients in the model. The wrong implementation of tensors concatenation does not pass the gradients through the model and deprives the agent to use part of the input knowledge.

The method according to various embodiments may contribute to better understanding the behavior of Reinforcement Learning agents which consecutive decisions came from sampling from the distribution generated by ANN. First of all, it may allow for identifying which input features influence agent's decisions the most and inspect the correlation between importance of given input feature to its value. It enables checking whether the ANN decision process matches the human intuition (for example, the faster the agent drives the more it pays attention to the value of acceleration). Besides that such analysis enables detecting errors present in the model itself (for example vanishing gradients - important information is ignored) or in input data (for example the charts shows the wrong data distribution caused by the incorrect implementation).

The method according to various embodiments may increase the safety and predictability of the entire system. In the case of AV motion planning, it may lead to an increase in the reliability of RL applications, in the opinion of OEMs and consumers.

As described herein, according to various embodiments, a method for detailed inspection of ANN model of RL agent may be provided. The statistical methods applied on collected samples of agent decisions allows for recognition of agent's behavior patterns by looking globally on overall behavior and not on individual action. By inspecting the analysis results, it may be confirmed that ANN concentrate on input features which are also important for human driver. By inspecting the correlation between attribution and feature values, patterns which match human intuition and that which are contrary to it may be found. This knowledge may help to improve the model by changing model architecture or enhance training process.

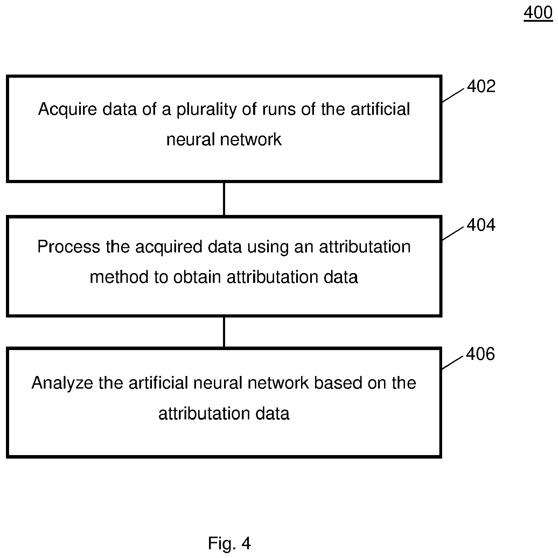

Fig. 4 shows a flow diagram 400 illustrating a method for analyzing a reinforcement learning agent based on an artificial neural network according to various embodiments. At 402, data of a plurality of runs of the artificial neural network may be acquired. At 404, the acquired data may be processed using an attribution method to obtain attribution data. At 406, the artificial neural network may be analyzed based on the attribution data.

According to various embodiments, the data may be acquired during at least one real-life run and/ or during at least one simulated run.

According to various embodiments, the attribution method may be based on determining a gradient with respect to input data along a path from a baseline to the input data.

According to various embodiments, the baseline may represent a general reference to all possible inputs.

According to various embodiments, the attribution method may include or may be at least one of Integrated Gradients, DeepLIFT, Gradient SHAP, or Guided Backpropagation and Deconvolution.

According to various embodiments, the method may further include dividing the attribution data into a plurality of groups, wherein the artificial neural network may be analyzed based on the plurality of groups.

According to various embodiments, the method may further include determining a correlation between parameters, attribution related to the parameters, and an output of the artificial neural network.

According to various embodiments, the correlation may include or may be a Pearson correlation and/or a Spearman's rank correlation coefficient.

According to various embodiments, the method may be applied to a motion planning module.

According to various embodiments, analyzing the artificial neural network may include or may be detecting errors in the artificial neural network or in input data to the artificial neural network.

According to various embodiments, the method may provide a local and post-hoc method for explaining the artificial neural network.

Each of the steps 402, 404, 406, and the further steps described above may be performed by computer hardware components.

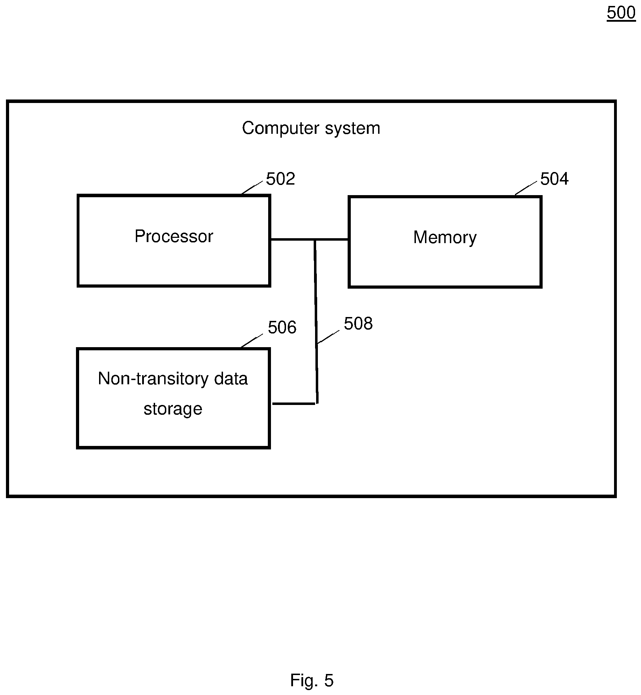

Fig. 5 shows a computer system 500 with a plurality of computer hardware components configured to carry out steps of a computer implemented method for analyzing a reinforcement learning agent based on an artificial neural network according to various embodiments. The computer system 500 may include a processor 502, a memory 504, and a non-transitory data storage 506.

The processor 502 may carry out instructions provided in the memory 504. The non-transitory data storage 506 may store a computer program, including the instructions that may be transferred to the memory 504 and then executed by the processor 502.

The processor 502, the memory 504, and the non-transitory data storage 506 may be coupled with each other, e.g. via an electrical connection 508, such as e.g. a cable or a computer bus or via any other suitable electrical connection to exchange electrical signals.

The terms "coupling" or "connection" are intended to include a direct "coupling" (for example via a physical link) or direct "connection" as well as an indirect "coupling" or indirect "connection" (for example via a logical link), respectively.

It will be understood that what has been described for one of the methods above may analogously hold true for the computer system 500.

Reference numeral list

100     graph which shows the accumulated average sum of rewards
102     vertical axis
104     horizontal axis
106     rewards for the Maneuver Agent
108     rewards for the ACC Agent

200     illustration of distributions of attribution values
202     horizontal axis
204     vertical axis
206     abort
208     follow lane
210     lane change to left
212     lane change to right
214     prepare for lane change to left
216     prepare for lane change to right

300     scatterplot which shows comparison between attribution values
308     follow lane
310     lane change to left
312     lane change to right
314     prepare for lane change to left
316     prepare for lane change to right

400     flow diagram illustrating a method for analyzing a reinforcement learning agent based on an artificial neural network according to various embodiments
402     step of acquiring data of a plurality of runs of the artificial neural network
404     step of processing the acquired data using an attribution method to obtain attribution data
406     step of analyzing the artificial neural network based on the attribution data

500     computer system according to various embodiments
502     processor
504     memory
506     non-transitory data storage
508     connection

**Claims**

1.  Computer implemented method for analyzing a reinforcement learning agent based on an artificial neural network, the method comprising the following steps carried out by computer hardware components:

    - acquiring (402) data of a plurality of runs of the artificial neural network;
    - processing (404) the acquired data using an attribution method to obtain attribution data; and
    - analyzing (406) the artificial neural network based on the attribution data.

2.  The computer implemented method of claim 1,
    wherein the data is acquired during at least one real-life run and/ or during at least one simulated run.

3.  The computer implemented method of at least one of claim 1 to 2,
    wherein the attribution method is based on determining a gradient with respect to input data along a path from a baseline to the input data.

4.  The computer implemented method of claim 3,
    wherein the baseline represents a general reference to all possible inputs.

5.  The computer implemented method of at least one of claim 1 to 4,
    wherein the attribution method comprises at least one of Integrated Gradients, DeepLIFT, Gradient SHAP, or Guided Backpropagation and Deconvolution.

6. The computer implemented method of at least one of claim 1 to 5, further comprising the following steps carried out by the computer hardware components:

dividing the attribution data into a plurality of groups;
wherein the artificial neural network is analyzed based on the plurality of groups.

7. The computer implemented method of at least one of claim 1 to 6, further comprising the following steps carried out by the computer hardware components:
determining a correlation between parameters, attribution related to the parameters, and an output of the artificial neural network.

8. The computer implemented method of claim 7,
wherein the correlation comprises a Pearson correlation and/or a Spearman's rank correlation coefficient.

9. The computer implemented method of at least one of claim 1 to 8,
wherein the computer implemented method is applied to a motion planning module.

10. The computer implemented method of at least one of claim 1 to 9,
wherein analyzing the artificial neural network comprises detecting errors in the artificial neural network or in input data to the artificial neural network.

11. The computer implemented method of at least one of claim 1 to 10,
wherein the computer implemented method provides a local and post-hoc method for explaining the artificial neural network.

12. Computer system (500), the computer system (500) comprising a plurality of computer hardware components configured to carry out steps of the computer implemented method of at least one of claims 1 to 11.

13. Non-transitory computer readable medium comprising instructions for carrying out the computer implemented method of at least one of claims 1 to 11.

Fig. 1

Fig. 2

300

Fig. 3

400

Acquire data of a plurality of runs of the artificial neural network — 402

Process the acquired data using an attribution method to obtain attribution data — 404

Analyze the artificial neural network based on the attribution data — 406

Fig. 4

500

Computer system

Processor 502

Memory 504

Non-transitory data storage 506

508

Fig. 5

14

Europäisches
Patentamt

European
Patent Office

Office européen
des brevets

**EUROPEAN SEARCH REPORT**

Application Number

EP 23 16 9673

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PANKIEWICZ NIKODEM ET AL: "Highway Pilot Training from Demonstration", 2021 25TH INTERNATIONAL CONFERENCE ON METHODS AND MODELS IN AUTOMATION AND ROBOTICS (MMAR), IEEE, 23 August 2021 (2021-08-23), pages 109-114, XP033973926, DOI: 10.1109/MMAR49549.2021.9528436 [retrieved on 2021-09-02] * abstract * * page 109, left-hand column, line 1 – page 114, left-hand column, line 30 * | 1-13 | INV. G06N3/092 G06N3/006 ADD. G06N7/01 |
| A | US 2021/073674 A1 (ZADOROJNIY ALEXANDER [US] ET AL) 11 March 2021 (2021-03-11) * abstract; claims 1-20; figures 1-2 * * paragraph [0001] – paragraph [0016] * * paragraph [0021] – paragraph [0056] * | 1-13 | |
| A | ORLOWSKI MATEUSZ ET AL: "Safe and Goal-Based Highway Maneuver Planning with Reinforcement Learning", ADVANCED, CONTEMPORARY CONTROL : PROCEEDINGS OF KKA 2020-THE 20TH POLISH CONTROL CONFERENCE, LÓDZ, POLAND, 2020; 2020.10.14-16, [Online] vol. 1196, 1 January 2020 (2020-01-01), pages 1261-1274, XP093075812, Cham DOI: 10.1007/978-3-030-50936-1_105 ISBN: 978-3-030-50936-1 Retrieved from the Internet: URL:http://link.springer.com/content/pdf/10.1007/978-3-030-50936-1_105> [retrieved on 2023-08-24] * abstract * * page 1261, line 1 – page 1272, last line * | 1-13 | TECHNICAL FIELDS SEARCHED (IPC) G06N |

-/--

The present search report has been drawn up for all claims

| Place of search | Date of completion of the search | Examiner |
|---|---|---|
| The Hague | 30 August 2023 | Totir, Felix |

EPO FORM 1503 03.82 (P04C01)

page 1 of 2

Europäisches
Patentamt

European
Patent Office

Office européen
des brevets

# EUROPEAN SEARCH REPORT

**Application Number**

**EP 23 16 9673**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | Pankiewicz Nikodem ET AL: "Attributation Analysis of Reinforcement Learning Based Highway Driver", , 14 September 2022 (2022-09-14), pages 1-10, XP093075794, DOI: 10.20944/preprints202209.0196.v1 Retrieved from the Internet: URL:https://www.preprints.org/manuscript/202209.0196/v1 [retrieved on 2023-08-23] * abstract * * page 1, line 1 - page 9, line 18 * ----- | 1-13 | |

TECHNICAL FIELDS
SEARCHED    (IPC)

The present search report has been drawn up for all claims

| Place of search | Date of completion of the search | Examiner |
|---|---|---|
| The Hague | 30 August 2023 | Totir, Felix |

EPO FORM 1503 03.82 (P04C01)

page 2 of 2

## ANNEX TO THE EUROPEAN SEARCH REPORT
## ON EUROPEAN PATENT APPLICATION NO.

**EP 23 16 9673**

30-08-2023

| Patent document cited in search report | Publication date | Patent family member(s) | Publication date |
|---|---|---|---|
| US 2021073674 A1 | 11-03-2021 | CN 112488307 A | 12-03-2021 |
| | | US 2021073674 A1 | 11-03-2021 |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MUKUND SUNDARARAJAN ; ANKUR TALY ; QI-QI YAN.** Axiomatic attribution for deep networks. *34th International Conference on Machine Learning,* March 2017, vol. 7, 5109-5118

- **H. LIU.** Comparing Welch's ANOVA, a Kruskal-Wallis Test, and Traditional ANOVA in Case of Heterogeneity of Variance. Virginia Commonwealth University, 2015